# DEMANDE DE BREVET EUROPEEN

(11) **EP 4 769 229 A1**
(43) Date de publication de la demande: **01.07.2026**
(21) Numéro de dépôt: 25227840.3
(22) Date de dépôt: 31.12.2025
(51) Int. Cl.: G06N 3/0495, G06N 3/08, G06N 3/0464, G06N 3/045, G06F 15/16, G06F 17/16, G06N 3/063

(54) **SYSTÈME ET PROCÉDÉ DE CALCULS POUR L'INFÉRENCE DE RÉSEAUX DE NEURONES CONVOLUTIFS**

(30) Priorité: 31.12.2024 FR 2415427
(71) Demandeur: THALES, 92190 Meudon (FR)
(72) Inventeur: LENORMAND, Eric, 91767 PALAISEAU CEDEX (FR); SAOUD, Hadi, 91767 PALAISEAU CEDEX (FR)
(74) Mandataire: Lavoix

(57) **Abrégé**

La présente invention concerne un procédé de calcul pour l'inférence d'un réseau de neurones convolutifs implémenté sur une plateforme de calcul multi-cœurs, chaque cœur comprenant une mémoire de cœur locale de capacité 'Cm' et une unité de calcul, les cœurs étant regroupés en groupes de cœurs, tel que dans un groupe, un cœur est assigné aux calculs des opérations neuronales et est connecté via des liens de voisinage à au moins un cœur voisin immédiat. Le procédé comprend lors d'une inférence, des étapes consistant à précharger un sous-ensemble d'opérandes requises pour effectuer une opération neuronale, dans les mémoires de cœurs locales des groupes de cœurs, les mémoires de cœurs locales d'un groupe de cœurs définissant une mémoire de groupe locale avec une capacité 'CM' égale à la somme des capacités 'Cm' des mémoires de cœur locales des cœurs appartenant à un même groupe ; et à exécuter l'opération neuronale, en transmettant vers les groupes de cœurs, des opérandes complémentaires aux opérandes préchargées en mémoire de groupe locale, et en effectuant par l'unité de calcul desdits cœurs de calcul assignés, l'opération neuronale avec l'ensemble des opérandes préchargées et complémentaires.

## Description

La présente invention concerne le domaine technique de l'intelligence artificielle (IA), et plus particulièrement celui des accélérateurs d'inférence pour des réseaux de neurones convolutifs.

Ces dernières années ont vu émerger de nouvelles topologies de réseaux de neurones convolutifs (CNN pour « Convolutional Neural Network » en anglais) permettant de résoudre des problèmes de classification, de détection ou de régression pour de nombreux domaines d'applications.

Certaines des applications potentielles nécessitent des réseaux de neurones convolutifs incluant plusieurs dizaines voire centaines de couches (des DNN pour « Deep Neural Network » en anglais). Ces applications peuvent être exploitées dans des environnements ayant de fortes contraintes énergétiques, de dissipation thermique ou même de poids et de volume. Cela concerne, entre autres, les applications de vision ou de calculs intensifs embarquées sur les drones, les véhicules ou même les satellites. Il est donc primordial de disposer de solutions pour exécuter des réseaux de neurones à haute performance sur du matériel compatible avec les contraintes des systèmes embarqués.

Les réseaux de neurones convolutifs consistent en une succession de couches de traitements qui sont en majorité des convolutions, et qui appliquent un noyau ou filtre de coefficients à un tableau d'entrée (le plus souvent une matrice 3D, nommée « Input Feature Map » en anglais). Les coefficients sont organisés en canaux X, Y (ou en lignes, colonnes), et produisant un tableau 3D de sortie (matrice 3D de sortie, aussi nommée « carte des caractéristiques » ou « carte des activations », mais aussi « Output Feature Map » en anglais).

Une fois la structure du réseau posée (i.e. la liste des couches, leurs caractéristiques et les différentes dépendances), le réseau passe par une phase d'apprentissage (« machine learning » en anglais) qui est réalisée hors ligne et qui produit des jeux de coefficients pour les différentes couches.

La phase d'inférence consiste à exécuter sur des données d'entrée (par exemple des images) les différentes couches du réseau qui a été appris, puis à obtenir en sortie un résultat dépendant du traitement neuronal appris.

Les algorithmes de CNN, bien que conceptuellement simples, sont très coûteux en calculs. Dans le cas d'une IA embarquée appliquée aux images, le besoin est d'être en mesure de traiter des dizaines de mégapixels (ou MP) par seconde, afin d'obtenir des résultats d'inférence en temps réel (i.e. avec une durée de traitement minimale, de l'ordre de la milliseconde ou de la dizaine de millisecondes en fonction de l'application). La performance attendue se chiffre en teramulacs par seconde ou Tmulacs/s, soit 10¹² opérations de multiplications-accumulations (mulacs) par seconde, une mulac étant l'opération centrale d'une convolution et étant présente en un nombre très élevé dans les algorithmes de CNN.

Pour atteindre de tels niveaux de performance, compte-tenu des limites des actuels processeurs, il faut avoir recours à des unités de traitement permettant des calculs massivement parallèles, comme des GPU (« Graphic Processing Unit » en anglais), des FPGA (« Field Programmable Gate Array » en anglais) ou des circuits spécialisés. Ces unités de traitement qui permettent l'exécution parallèle d'opérations mulacs agissent comme des accélérateurs.

Les FPGAs traditionnels sont munis d'un grand nombre d'unités appelées DSP Blocks (« Digital Signal Processing » en anglais), incluant des opérateurs câblés pour exécuter efficacement certaines opérations mathématiques comme les mulacs, souvent utilisées pour l'inférence de CNN.

La puissance de calcul théorique (i.e. le nombre d'opérateurs multiplié par la fréquence d'horloge) peut atteindre quelques Tmulac/s, via l'utilisation de plusieurs centaines de DSP Blocks utilisés à 400 ou 500 MHz. Cependant, plusieurs facteurs limitent la performance effective, principalement les débits de mouvements des données entre les mémoires.

Des solutions pour améliorer la performance par exemple des FPGA, consistent à ajouter aux composants classiques des FPGAs (i.e. la logique programmable, les mémoires, les DSP Blocks, le processeur scalaire), une matrice de processeurs vectoriels ou cœurs de calcul (qui peuvent être désignés unitairement par « cœur » ou « processeur élémentaire » PE ou « Compute Unit » CE), qui sont très puissants, sont programmables (par exemple en assembleur ou en C++) et qui sont capables d'élever la puissance de calcul théorique.

Il en est ainsi par exemple pour la plateforme de calcul multi-cœurs Versal d'AMD où chaque cœur de calcul appelé « Al Engine » (AIE) est capable d'exécuter 128 mulacs d'opérandes en 8 bits à chaque cycle d'horloge de 0,8 ns, soit effectuer 160 Gmulacs/s théoriques. La plateforme contient une matrice de 400 AIEs, ce qui élève sa puissance de calcul théorique à 64 Tmulacs/s, bien au-delà de la puissance théorique des DSP d'un FPGA similaire en taille et en consommation énergétique. Cependant en pratique les implémentations connues arrivent plutôt à des performances effectives entre 1 et 10 Tmulacs/s pour une inférence de CNN, car l'intégralité des 400 AIEs disponibles ne sont pas utilisées efficacement pour l'inférence.

Plus généralement, les architectures actuelles d'accélérateurs pour l'exécution parallèle d'opérations mulacs par des matrices de calcul multi-cœurs présentent des limitations pour obtenir une puissance de calcul nécessaire à l'inférence de réseaux de neurones convolutifs, en particulier pour l'utilisation de tels réseaux pour des applications dans des environnements embarqués.

Il existe alors un besoin d'augmenter l'efficacité des calculs sur les cœurs d'un système multi-cœurs lors d'une inférence pour un réseau de neurones convolutifs.

Le but de l'invention est alors de proposer un procédé et un dispositif pour exécuter efficacement des algorithmes neuronaux sur un système de calcul multi-cœurs.

Avantageusement, la solution proposée permet d'optimiser la capacité de calcul de chaque cœur de calcul d'une plateforme de calcul multi-cœurs, en augmentant le nombre d'opérations effectuées pendant la phase d'exécution d'un noyau de calcul par cycle d'horloge.

Le principe général de l'invention repose sur une stratégie d'utilisation que d'une seule partie des cœurs de calcul d'un système multi-cœurs pour faire les calculs d'une opération neuronale, et d'une extension de la capacité de la mémoire locale des cœurs effectuant les calculs en exploitant la mémoire locale d'un ou plusieurs cœurs de calcul voisins immédiats.

Avantageusement, le rendement puissance de calcul/consommation est augmenté et devient supérieur au rendement qu'aurait chaque cœur s'il se chargeait des calculs.

Avantageusement, le rendement énergétique du système global est amélioré, car les cœurs de calcul qui ne réalisent pas de calcul mais contribuent uniquement à une capacité de stockage étendue par la mise à disposition de leur mémoire locale à un cœur dédié au calcul, peuvent être éteints (i.e. la consommation dynamique d'électricité est nulle, leurs unités de calculs peuvent de plus être mises en veille, ou être mises en « power gating », supprimant aussi la consommation statique d'électricité).

L'augmentation de la mémoire locale d'un cœur de calcul dédié au calcul (i.e. extension de la capacité mémoire), d'une mémoire unique m à un groupe M de mémoires (des cœurs de calcul voisins directs), permet ainsi de traiter plus de données dans le programme de calcul. Avantageusement, ceci limite le besoin de découper un programme neuronal en plusieurs itérations, et donc améliore l'efficacité du programme neuronal et l'efficacité des calculs sur les cœurs.

Grace au rendement par cycle amélioré, il devient possible soit (1) d'augmenter la puissance de calcul effective du système avec une consommation énergétique réduite, soit (2) de limiter la fréquence de fonctionnement du système multi-cœurs pour maintenir la même puissance de calcul qu'un système standard mais avec une consommation énergétique réduite (encore plus réduite que dans le cas (1)).

A cet effet, l'invention a pour objet un procédé de calcul pour l'inférence de réseaux de neurones convolutifs, le réseau de neurones convolutifs étant implémenté sur une plateforme de calcul multi-cœurs comprenant une pluralité de cœurs de calcul, chaque cœur comprenant une mémoire de cœur locale de capacité 'Cm' et une unité de calcul, les cœurs de calcul étant regroupés en groupes de cœurs de calcul, tel que dans un groupe, un cœur est assigné aux calculs des opérations neuronales et est connecté via des liens de voisinage à au moins un cœur de calcul voisin immédiat. Le procédé comprend lors d'une inférence, des étapes consistant à :
- précharger un sous-ensemble d'opérandes requises pour effectuer une opération neuronale, dans les mémoires de cœurs locales des groupes de cœurs, les mémoires de cœurs locales d'un groupe de cœurs définissant une mémoire de groupe locale avec une capacité 'CM' égale à la somme des capacités 'Cm' des mémoires de cœur locales des cœurs appartenant à un même groupe ;
- exécuter l'opération neuronale, ladite exécution comprenant des étapes consistant à transmettre vers les groupes de cœurs, des opérandes complémentaires aux opérandes préchargées en mémoire de groupe locale ; et à effectuer, par l'unité de calcul desdits cœurs de calcul assignés, l'opération neuronale avec l'ensemble des opérandes préchargées et complémentaires.

Comme les mémoires locales des cœurs de calcul sont initialisées avec au moins une partie des opérandes avant l'exécution d'une opération neuronale, le besoin d'alimentation en données des différents cœurs du système multi-cœurs depuis l'extérieur et pendant l'exécution devient moins important. Il peut même devenir inférieur à la bande passante maximale des différents bus de données. Ainsi avantageusement, la bande passante des bus de données ne devient plus un facteur limitant.

Le besoin amoindri en bande passante a pour répercussion de moins limiter le fonctionnement des cœurs de calcul. En effet, ils peuvent recevoir la majorité voir toutes leurs opérandes à temps (i.e. les opérandes sont déjà chargées avant même l'exécution du calcul les nécessitant), et ainsi fonctionner à leur potentiel maximal. De manière avantageuse, l'invention permet qu'un nombre maximal d'opérations par cycle d'horloge puisse être atteint. Cet avantage est accentué par l'utilisation de groupes logiques avec une mémoire de groupe locale étendue, permettant ainsi l'initialisation avec un plus grand nombre de données qu'une mémoire locale individuelle.

Suivant d'autres aspects avantageux de l'invention, le procédé de l'invention comprend une ou plusieurs des caractéristiques suivantes, prises isolément ou suivant toutes les combinaisons techniquement possibles :
- l'étape de préchargement dans chaque mémoire de groupe locale consiste à stocker les opérandes dudit sous-ensemble d'opérandes dans tout ou partie des mémoires de cœur locales dudit groupe ;
- l'étape de préchargement dans chaque mémoire de groupe locale consiste à précharger un sous-ensemble de coefficients de couches neuronales obtenus lors d'une phase d'apprentissage du réseau de neurones ;
- l'étape de transmission d'opérandes complémentaires consiste à transmettre des données de type pixels ou à transmettre des valeurs de « feature-map » ;
- l'étape de transmission consiste à transmettre des données depuis une mémoire externe à la plateforme de calcul multi-cœurs via un réseau de bus de communication, ledit réseau de bus étant agencé sur la plateforme multi-cœurs pour acheminer des données sur tous les cœurs de calcul et entre les cœurs de calcul ;
- l'étape d'effectuer l'opération neuronale comprend une étape de transfert de données stockées dans les mémoires locales des groupes, via les liens de voisinage entre cœurs voisins immédiats ;
- l'étape d'exécution d'une opération neuronale consiste à effectuer des opérations de multiplication-accumulation par les unités de calcul desdits cœurs dédiés ;
- le procédé comprend de plus une étape consistant à transmettre un résultat d'une opération neuronale vers une mémoire extérieure à la plateforme de calcul multi-cœurs, ladite étape étant effectuée après l'exécution d'une opération neuronale courante pour transmettre un résultat courant ou effectuée pendant l'exécution d'une opération neuronale pour transmettre un résultat d'une opération neuronale précédente ;
- les opérations de l'exécution d'une opération neuronale, sont réalisées en parallèle ou en séquentiel ;
- le procédé comprend de plus pendant l'étape d'exécution neuronale, des étapes de traitement de données opérées sur des unités de calcul de cœurs de calculs voisins directs d'un cœur de calcul dédié ;
- le procédé comprend de plus une étape consistant à mettre en veille les unités de calcul non actives des cœurs de calcul dédiés au stockage ou à les mettre en « power gating » ;
- le procédé comprend une étape initiale consistant à créer des groupes de cœurs selon un motif prédéfini, le regroupement définissant pour chaque groupe, un cœur de calcul dédié aux calculs tel que seules les unités de calcul dudit cœur sont actives pour faire des calculs, et tel que la mémoire de groupe locale d'un groupe de cœurs est définie par une capacité 'C_{M}' égale à la somme des capacités 'Cₘ' des mémoires de cœur locales des cœurs dudit groupe.

L'invention concerne également un dispositif de calcul pour l'inférence de réseaux de neurones convolutifs, le réseau de neurones convolutifs étant implémenté sur une plateforme de calcul multi-coeurs comprenant une pluralité de coeurs de calcul, chaque cœur comprenant une mémoire de cœur locale de capacité 'Cₘ' et une unité de calcul, les cœurs de calcul étant regroupés en groupes de cœurs de calcul, tel que dans un groupe, un cœur est assigné aux calculs des opérations neuronales et est connecté via des liens de voisinage à au moins un cœur de calcul voisin immédiat, le dispositif comprenant des moyens pour mettre en œuvre les étapes du procédé de l'invention.

L'invention s'intègre dans une implémentation complète de processeur d'inférence de réseaux de neurones convolutifs et fournit une solution souveraine et personnalisable aux besoins des utilisateurs, en particulier pour des applications industrielles d'IA temps réel enfouies et à haute performance.

L'invention trouvera des applications avantageuses dans de nombreux domaines, dont le transport terrestre (systèmes d'aide à la conduite, conduite autonome), la surveillance environnementale (détection de feux, de marées noires, de couverture végétales, ...), l'industrie générale (systèmes de perception, capteurs intelligents, maintenance prédictive) ou encore l'agriculture (détection des maladies et parasites, détermination du niveau de maturité, ...).

L'invention apparaîtra plus clairement à la lecture de la description qui va suivre, donnée uniquement à titre d'exemple non limitatif, et faite en référence aux dessins dans lesquels :
- la figure 1 représente schématiquement une plateforme de calcul multi-cœurs ;
- la figure 2a illustre schématiquement une partie d'un système multi-cœurs selon un mode de réalisation de l'invention ;
- la figure 2b détaille schématiquement les liens de communication d'un cœur de calcul d'un système multi-cœurs selon un mode de réalisation de l'invention ;
- la figure 3 illustre schématiquement un cœur de calcul unitaire d'un système multi-cœurs selon un mode de réalisation de l'invention ;
- la figure 4 est un organigramme des étapes pour définir des groupes logiques de cœurs de calcul selon un mode de réalisation de l'invention ;
- la figure 5 est un organigramme des étapes de calcul opérées lors d'une inférence selon un mode de réalisation de l'invention ;
- les figures 6a à 6c illustrent des exemples de motifs de regroupements de cœurs de calcul selon l'invention.

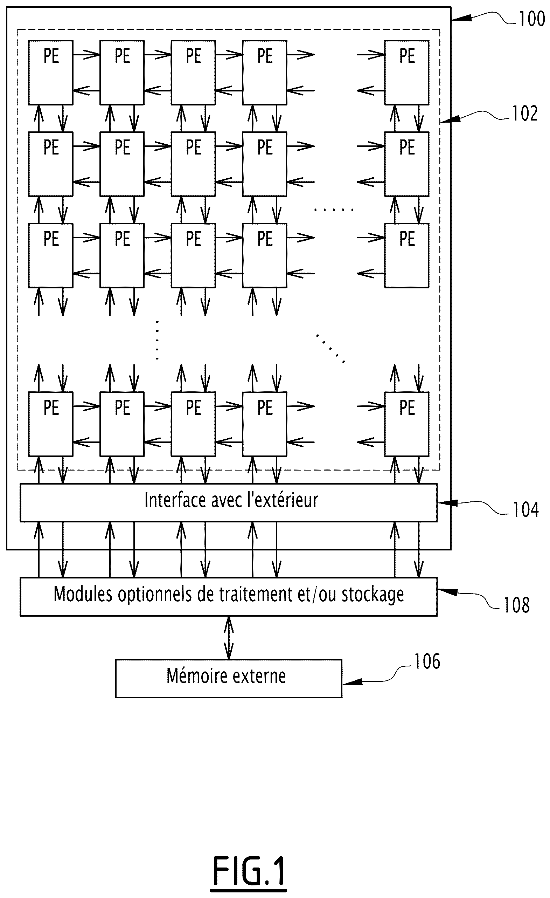

La figure 1 représente schématiquement une plateforme de calcul 100 (constituant tout ou partie d'une puce électronique) comprenant un système multi-cœurs 102 et une interface 104 pour établir les communications avec une mémoire globale externe 106.

L'interface 104 permet entre autre d'adapter les bus extérieurs avec les bus intérieurs en termes de protocole, de fréquence d'horloge, de largeur de bus et de nombre de bus.

La mémoire externe 106 est adaptée pour stocker toutes les données initiales pour effectuer un calcul de convolution tels que les opérandes de l'opération neuronale (e.g. les coefficients de convolution, les pixels ou autres valeurs d'entrée), pour stocker les résultats intermédiaires (e.g. les résultats, aussi nommés « carte des activations » ou les « Feature Map » (selon l'anglicisme consacré) des différentes couches neuronales), et pour stocker les données de sortie obtenues après un calcul. Les données d'entrée, tout comme les résultats de sortie, se trouvent dans le bloc de mémoire externe 106, par exemple de type DDR (Double Data Rate en anglais) qui se trouve à l'extérieur de la plateforme de calcul 100. Les données d'entrée sont d'une part les données d'entrée du réseau (par exemple une image à traiter qui change au rythme des trames vidéos), et d'autre part les coefficients des couches neuronales qui ont été calculés pendant la phase d'apprentissage du réseau neuronal.

De manière optionnelle les communications entre la mémoire externe 106 et la plateforme 100 peuvent être établies via divers modules intermédiaires de traitements et de stockage 108 de type cache ou FPGA, par exemple pour réorganiser des données ou accélérer des transferts.

Une ou plusieurs horloges cadencent le fonctionnement du système multi-cœurs. Par cette architecture, chaque cœur est capable d'exécuter plusieurs opérations par cycle d'horloge, e.g. 128 opérations de multiplication-accumulation par cycle.

Une plateforme de calcul multi-cœurs organisée selon la figure 1, présente généralement les limitations suivantes.

Une première limitation concerne la taille, i.e. la capacité de stockage Cₘ de chaque cellule de mémoire locale 'm' de chaque cœur, qui, la plupart du temps, est insuffisante pour stocker toutes les données nécessaires à l'exécution complète d'un programme neuronal (même partiel avec quelques couches de convolution) sur un cœur de calcul.

Une autre limitation est relative à la bande passante des bus de données qui n'est pas suffisante pour soutenir en données les différents cœurs lorsque chacun d'entre eux exécute plusieurs instructions par cycle.

La conséquence de la limitation sur la taille de la mémoire locale, est qu'il est difficile voire impossible de précharger en mémoire locale toutes les données nécessaires à une opération neuronale. Ceci combiné à la limitation sur la bande passante fait que, l'opération neuronale ne peut être exécutée en une fois sur la totalité des données d'entrée, et elle doit l'être itérativement sur plusieurs portions des données jusqu'à traiter toutes les données.

De manière courante, l'exécution d'un programme dans un cœur de calcul passe par trois phases : une phase d'initialisation couvrant l'importation de données et de coefficients, une phase de calculs couvrant l'exécution d'un programme dans le cœur calcul, et une phase de terminaison couvrant la sortie des résultats. Or, les temps d'exécution des phases d'initialisation et de terminaison sont souvent difficilement incompressibles. Aussi, l'inconvénient d'un tel découpage en trois phases du traitement de l'exécution d'un programme avec une exécution itérative du programme neuronal sur plusieurs portions des données d'entrée, est que les phases d'initialisation et de terminaison sont multipliées, ce qui abaisse alors l'efficacité globale des calculs sur les cœurs.

Aussi, avantageusement le procédé de l'invention vise à optimiser la capacité de calcul de chaque cœur de calcul d'une plateforme de calcul multi-cœurs, en augmentant le nombre d'opérations effectuées pendant la phase de calcul d'un noyau de calcul, ce qui mathématiquement augmente le nombre d'opérations effectuées par cycle d'horloge et donc l'efficacité des calculs sur les cœurs.

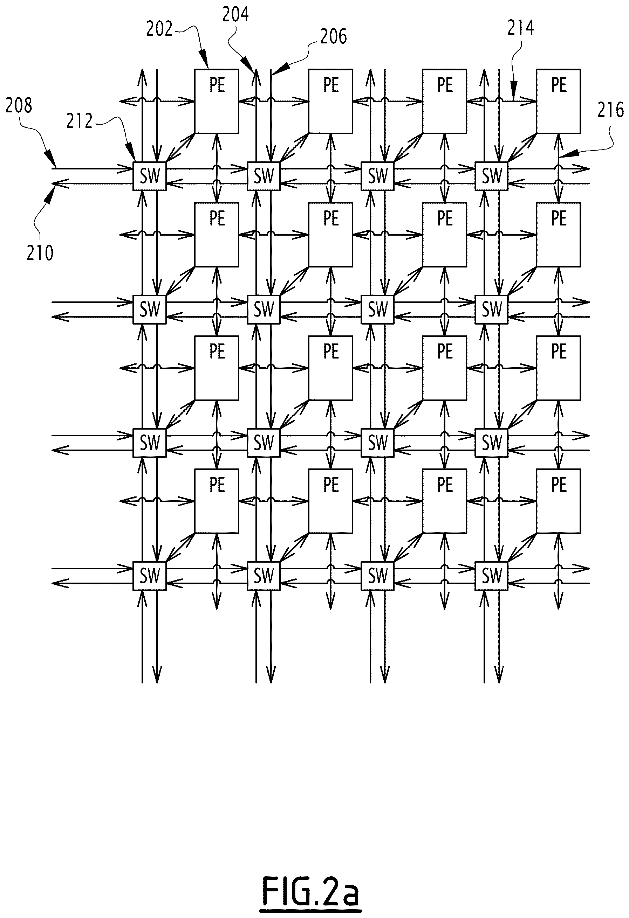

Un système multi-cœurs selon l'invention peut être organisé, par exemple comme illustré sur la figure 2a, en une matrice à deux dimensions comprenant : une pluralité de cœurs de calcul (PE) connectés par des liens ou bus de communication distribués sur toute la matrice suivant un patron défini à la conception ou implémentation de la matrice multi-cœurs et permettant d'échanger des données entre l'intérieur et l'extérieur de la matrice de cœurs ; et des liens de voisinage entre cœurs voisins immédiats permettant à chaque cœur un accès direct à la mémoire locale d'un cœur de calcul voisin immédiat.

Pour des raisons de simplification de la description, il est référencé par 202 un seul cœur de la matrice, par (204, 206) et (208, 210) des paires de bus de communication permettant le transfert de données à l'intérieur et vers l'extérieur de la matrice, et par (214, 216) des liens de voisinage permettant le transfert de données entre cœurs voisins immédiats.

Selon cet exemple de matrice régulière multi-cœurs à deux dimensions, les bus de communications et les liens de voisinage sont organisés en réseaux de liens lignes/colonnes ou liens horizontaux/verticaux ou liens suivant une première dimension et une deuxième dimension.

Dans un mode de réalisation, un composant de distribution 212 (« switch » en anglais), peut être couplé à chaque cœur de calcul 202 pour distribuer les données des bus de communication vers ce cœur de calcul ou distribuer des données depuis ce cœur de calcul vers les bus de communication.

Une matrice multi-cœurs selon l'invention implémente de plus des liens de voisinage entre cœurs voisins immédiats qui permettent à un cœur un accès direct à la mémoire locale d'un ou plusieurs cœurs de calcul voisins immédiats. Ainsi sur l'exemple simplifié, il est montré des liens de voisinage 214 offrant un accès direct entre deux cœurs voisins immédiats positionnés sur une même ligne (ou horizontaux), et il est montré des liens de voisinage 216 offrant un accès direct entre deux cœurs voisins immédiats positionnés sur une même colonne (ou verticaux).

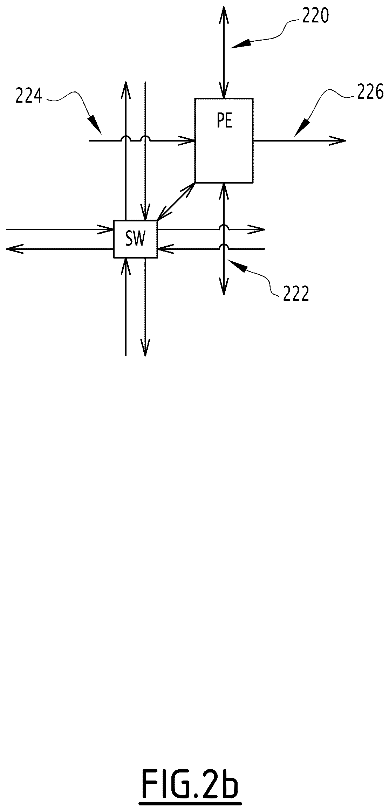

L'homme du métier comprend que toute généralisation des liens de voisinage peut être faite pour une matrice multi-cœurs, permettant des accès unidirectionnels ou bidirectionnels entre cœurs voisins immédiats, et/ou permettant des accès à un ou plusieurs cœurs de calcul voisins immédiats. Ainsi, la figure 2b illustre schématiquement un exemple de liens de communication bidirectionnels (220, 222) et de liens de communication unidirectionnels (224, 226).

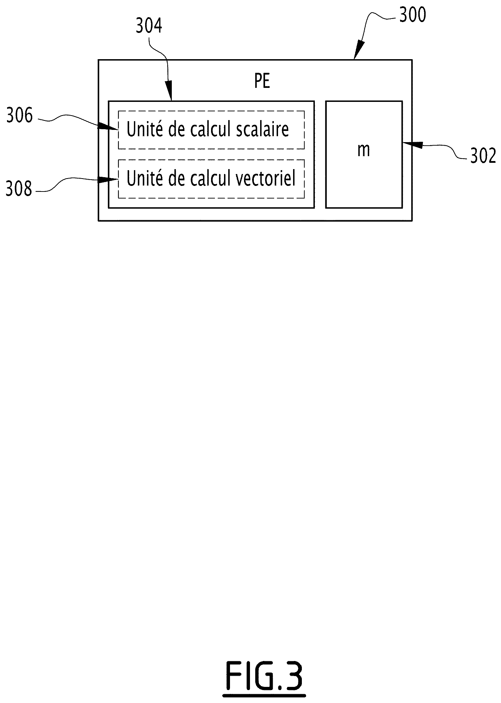

La figure 3 illustre schématiquement un cœur de calcul unitaire 300 d'un système multi-cœurs selon l'invention.

Chaque cœur de calcul est assimilable à un processeur élémentaire comprenant au moins une mémoire locale 302 et une unité de calcul 304 composée d'une ou plusieurs unités de calcul scalaire 306 et d'une ou plusieurs unités de calcul vectoriel 308. Chaque cœur exécute son propre programme de calcul, qui peut différer du programme exécuté par d'autres cœurs.

La mémoire locale d'un cœur de calcul est une cellule de mémorisation 'm' ayant une capacité de stockage 'Cₘ' et permettant de stocker, entre autres, des opérandes et des résultats de programmes exécutés sur le cœur.

Dans le contexte de l'invention, chaque cœur à un accès direct à sa propre mémoire locale mais aussi à la mémoire locale d'au moins un cœur voisin direct ou immédiat par des liens de voisinage.

Par exemple, pour un cœur ayant un accès direct à 'n = 3' cœurs voisins, e.g. le cœur voisin au-dessus (ou PE nord), le cœur voisin en-dessous (ou PE sud) et le cœur voisin à droite (ou PE est), ce cœur peut alors adresser, via les liens de voisinage, 4 cellules de mémorisation, i.e. celles des trois cœurs voisins plus la sienne. La cellule de mémorisation de chaque cœur est elle-même accessible par 4 cœurs de calcul, i.e. par les trois cœurs voisins immédiats et son propre cœur, à l'exception des cœurs avec leur cellule mémoire se trouvant sur les bords de la matrice de cœurs.

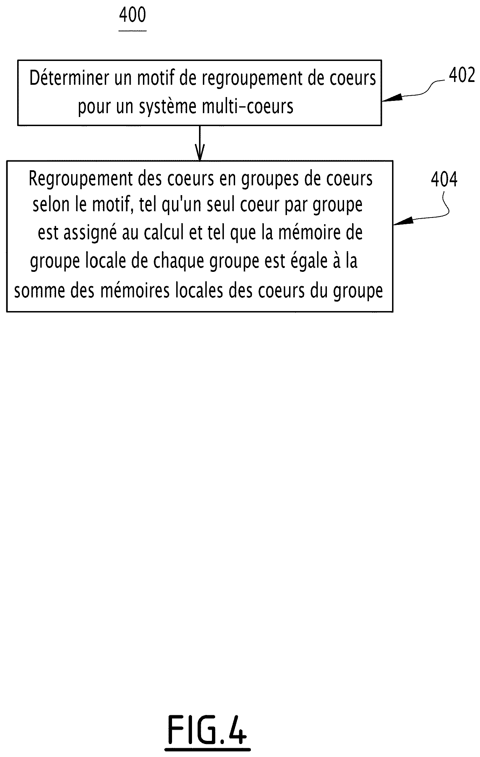

La figure 4 est un organigramme des étapes pour définir des groupes logiques de cœurs de calcul selon un mode de réalisation de l'invention.

Le procédé 400 est opéré avant la mise en œuvre d'une inférence. Il consiste initialement en 402 à déterminer un motif pour regrouper des cœurs de calculs en groupes de cœurs de calcul. Un motif de regroupement définit un nombre 'n' de cœurs de calcul par groupe, 'n' étant au minimum 2 cœurs, et dépendant au maximum du nombre de voisins accessibles par des liens de voisinage.

Le choix d'un motif dépendra des applications pour lesquelles des inférences sont mises en œuvre. Plus précisément, le choix du motif sera dicté par les besoins en mémoire des différentes couches du réseau de neurones, et donc de la nécessité de regrouper plusieurs mémoires locales 'm'.

L'étape 402 consiste aussi à définir la position du ou des cœurs d'un groupe qui sont voisins immédiats.

Dans une étape suivante 404, le procédé consiste à créer logiquement les groupes de cœurs selon le motif de regroupement prédéfini. Il est assigné dans chaque groupe de cœurs, un seul cœur de calcul pour effectuer les calculs d'une opération neuronale (lors de l'inférence), c'est-à-dire que seules les unités de calcul de ce cœur dédié sont actives pour exécuter des calculs relatifs à une opération neuronale, et les unités de calcul des autres cœurs du groupe ne sont pas sollicitées pour cette exécution.

De plus, l'étape 404 consiste à définir une mémoire de groupe locale pour chaque groupe de cœurs de calcul. La mémoire de groupe locale d'un groupe de cœurs est définie par une capacité 'C_{M}' qui est égale à la somme des capacités 'Cₘ' des mémoires locales de l'ensemble des cœurs de ce groupe.

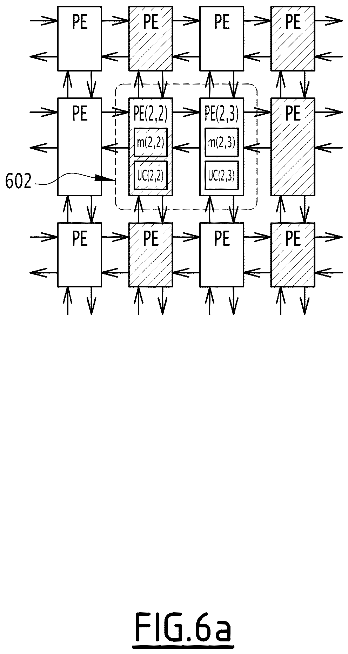

Les figures 6a à 6c illustrent des exemples de motifs de regroupements de cœurs de calcul selon l'invention.

La figure 6a illustre une partie d'un système multi-cœurs avec un motif de regroupement 602 en rectangle. Pour un tel motif, un groupe de cœurs contient deux cœurs de calcul voisins directs, ici désignés par PE(2,2) et PE( 2,3), ayant respectivement une unité de calcul UC(2,2) et UC(2,3) et une mémoire locale m(2,2) et m(2,3).

Il est défini que le cœur de calcul PE(2,2) est celui dédié aux calculs des opérations neuronales. Ainsi, l'unité de calcul UC(2,2) du cœur de calcul PE(2,2) est la seule unité de calcul active pour le groupe pour les opérations neuronales, et l'unité de calcul UC(2,3) du cœur de calcul PE(2,3) reste non active pour ces opérations.

Avantageusement, l'unité de calcul UC(2,3) reste disponible pendant l'exécution d'une opération neuronale sur l'unité de calcul UC(2,2), pour exécuter des traitements annexes. Les traitements parallèles peuvent consister en l'exécution de tâches de synchronisation entre les cœurs de calcul, ou d'opérations neuronales simples ou qui ne requièrent pas l'utilisation de coefficients de l'opération neuronale en cours (par exemple l'exécution de couches d'activation ou de normalisation).

La création d'un groupe avec deux cœurs de calcul, permet que la capacité de mémoire locale pour le groupe soit augmentée, et devienne égale à la somme de la capacité de la mémoire locale m(2,2) du cœur de calcul dédié PE(2,2) et de la capacité de la mémoire locale m(2,3) du cœur de calcul PE(2,3).

Le système multi-cœurs ainsi reconfiguré en une pluralité de groupes de cœurs de calcul avec un cœur dédié au calcul par groupe, permet d'augmenter la quantité de données à traiter par le cœur UC(2, 2).

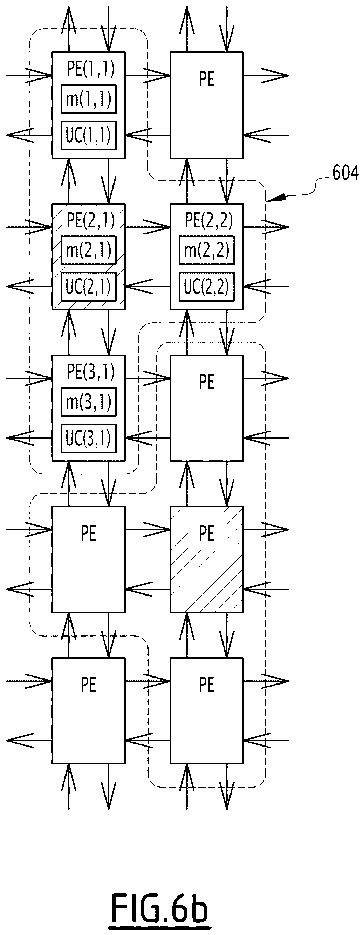

La figure 6b illustre une partie d'un système multi-cœurs avec un motif de regroupement 604 qui permet de créer des groupes de cœurs avec quatre cœurs de calcul voisins directs, ici désignés par PE(1,1), PE(2,1), PE(2,2) et PE(3,1). Le cœur PE(1,1) dispose d'une unité de calcul UC(1,1) et d'une mémoire locale m(1,1). Le cœur PE(2,1) dispose d'une unité de calcul UC(2,1) et d'une mémoire locale m(2,1). Le cœur PE(2,2) dispose d'une unité de calcul UC(2,2) et d'une mémoire locale m(2,2). Le cœur PE(3,1) dispose d'une unité de calcul UC(3,1) et d'une mémoire locale m(3,1).

Il est défini que le cœur de calcul PE(2,1) est celui dédié aux calculs des opérations neuronales. Ainsi, l'unité de calcul UC(2,1) du cœur de calcul PE(2,1) est la seule unité de calcul active pour le groupe pour les opérations neuronales, et les unités de calcul UC(1,1), UC(2,2) et UC(3,1) des cœurs de calcul voisins directs restent non actives pour ces opérations.

De manière similaire à l'exemple de la figure 6a, les unités de calcul des cœurs voisins directs restent disponibles pendant l'exécution d'une opération neuronale sur l'unité de calcul UC(2,1), pour exécuter des traitements annexes sur des données acheminées via les bus de communication de la matrice.

La création d'un groupe avec quatre cœurs de calcul, permet que la capacité de mémoire locale pour le groupe soit augmentée, et devienne égale à la somme de la capacité de la mémoire locale m(2,1) du cœur de calcul dédié PE(2,1) et de la capacité de chaque mémoire locale m(1,1), m(2,2) et m(3,1) des cœurs de calcul voisins directs.

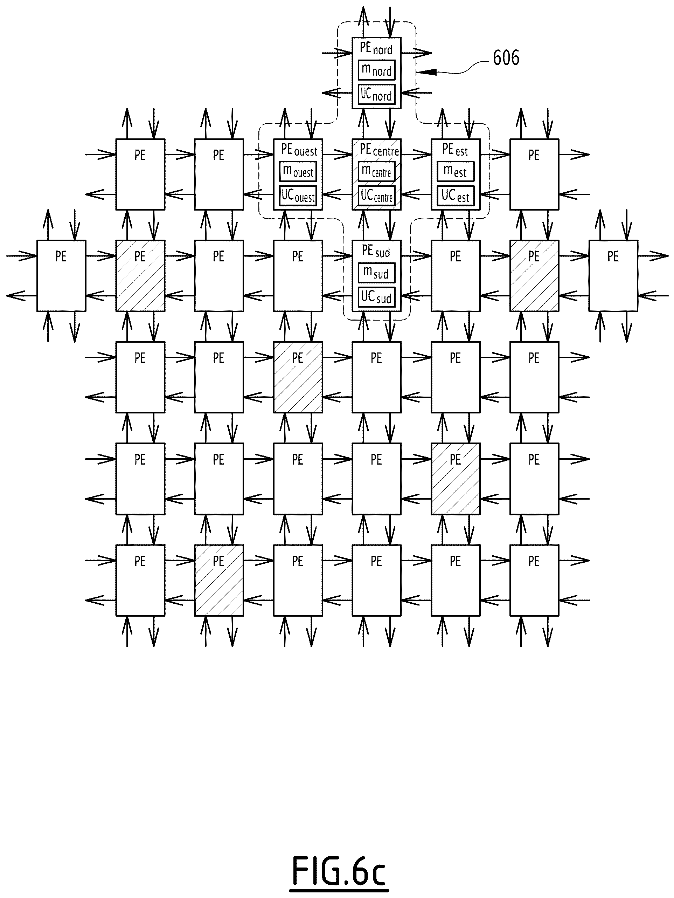

La figure 6c illustre un autre exemple d'un motif de regroupement 606 en croix qui permet de créer des groupes de cœurs avec cinq cœurs de calcul voisins directs. Les cœurs de calcul sont désignés pour un groupe par PE_{centre}, PE_{nord}, PE_{sud}, PEₑₛₜ et PEₒᵤₑₛₜ.

Le cœur PE_{centre} dispose d'une unité de calcul UC_{centre} et d'une mémoire locale m_{centre}. Le cœur PE_{nord} dispose d'une unité de calcul UC_{nord} et d'une mémoire locale m_{nord}. Le cœur PE_{sud} dispose d'une unité de calcul UC_{sud} et d'une mémoire locale m_{sud}. Le cœur PEₑₛₜ dispose d'une unité de calcul UCₑₛₜ et d'une mémoire locale mₑₛₜ. Le cœur PEₒᵤₑₛₜ dispose d'une unité de calcul UCₒᵤₑₛₜ et d'une mémoire locale mₒᵤₑₛₜ.

Il est défini que le cœur de calcul PE_{centre} est celui dédié aux calculs des opérations neuronales. Ainsi, l'unité de calcul UC_{centre} est la seule unité de calcul active pour le groupe pour les opérations neuronales, et les unités de calcul UC_{nord}, UC_{sud}, UCₑₛₜ et UCₒᵤₑₛₜ des cœurs de calcul voisins directs restent non actives pour ces opérations.

De manière similaire aux exemples des figures 6a et 6b, pendant l'exécution d'une opération neuronale courante sur l'unité de calcul dédiée UC_{centre}, les unités de calcul des cœurs voisins directs d'un cœur dédié (i.e. cœur dédié aux calculs neuronaux) restent disponibles pour exécuter des traitements annexes.

La création d'un groupe avec cinq cœurs de calcul, permet que la capacité de mémoire locale pour le groupe soit augmentée, et devienne égale à la somme de l'ensemble des capacités des cœurs de calcul du groupe, i.e. la somme de la capacité de la mémoire locale m_{centre} du cœur de calcul dédié PE_{centre} plus la capacité de chaque mémoire locale m_{nord}, m_{sud}, mₑₛₜ et mₒᵤₑₛₜ des cœurs de calcul voisins directs.

Il a été donné quelques exemples de motifs de regroupement de cœurs de calcul avec assignation d'un cœur de calcul dédié, pour la bonne compréhension de l'invention et non par limitation. L'homme du métier pourra décliner d'autre variantes de motifs.

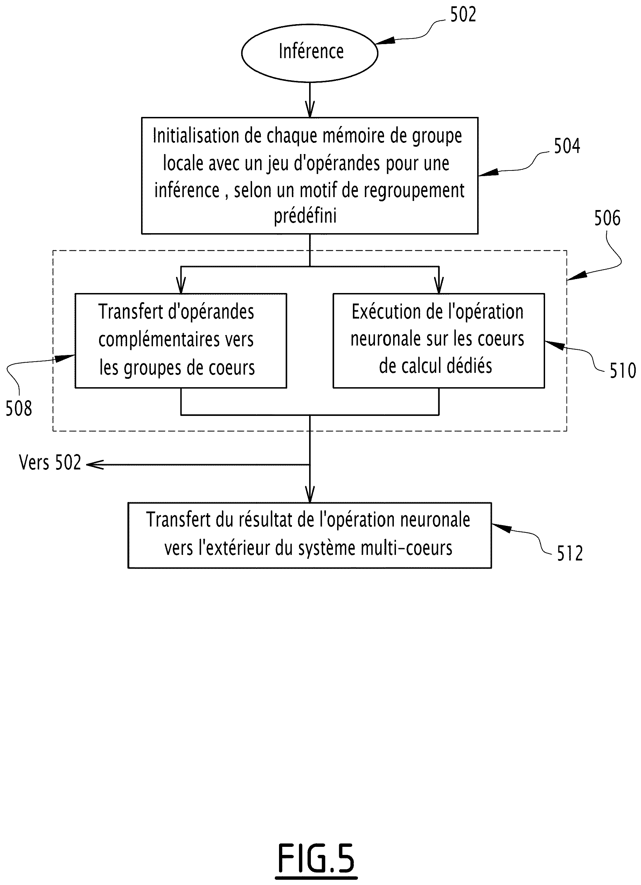

La figure 5 est un organigramme des étapes de calcul opérées sur un système multi-cœurs pour l'inférence de réseaux de neurones convolutifs. Le réseau de neurones convolutifs est implémenté selon un mode de réalisation sur une plateforme de calcul multi-cœurs qui contient un système multi-cœurs où chaque cœur de calcul comprend une mémoire de cœur locale de capacité 'Cₘ' et au moins une unité de calcul, un réseau de bus de communication et des liens de voisinage entre cœurs voisins directs.

Le système multi-cœurs a été préparé dans une phase préparatoire antérieure à l'inférence selon une programmation logique (i.e. le procédé 400) où des groupes de cœurs de calcul ont été définis selon un motif de regroupement choisi avec assignation d'un cœur de calcul dédié aux calculs d'une opération neuronale par groupe de cœurs.

Le procédé de calcul d'inférence 500 débute par une étape 502 lorsque des données d'entrées correspondant à une matrice à traiter (par exemple une image complète, ou bien une image partielle avec un nombre limité de lignes et de colonnes) par une opération neuronale sont disponibles dans une mémoire externe au système multi-cœurs, par exemple une mémoire de type DDR (mémoire 106 de la figure 1).

Dans une première étape 504, le procédé permet l'initialisation de la mémoire M de groupe de cœurs locale, en préchargeant un sous-ensemble des opérandes requises pour effectuer l'opération neuronale.

Dans un mode de réalisation, l'étape de préchargement dans les mémoires de groupe locales consiste à stocker des opérandes dans tout ou partie de la mémoire M.

Dans un mode de réalisation, par exemple où chaque groupe de cœurs de calcul traite des canaux différents d'une image complète ou partielle, l'étape de préchargement dans les mémoires de groupe locale consiste à transférer et stocker des opérandes différentes dans les mémoires de groupe locales.

Dans un mode de réalisation, par exemple où chaque groupe de cœurs de calcul traite une image partielle différente, l'étape de préchargement dans les mémoires de groupe locale consiste à transférer et stocker les mêmes coefficients pour chaque groupe de cœurs et des pixels différents.

Dans un mode de réalisation, l'étape de préchargement dans la mémoire de groupe locale consiste à précharger un sous-ensemble de coefficients de couches neuronales obtenus lors d'une phase d'apprentissage du réseau de neurones.

Quand l'ensemble des mémoires de groupe locales sont initialisées, le procédé poursuit par une étape 506 d'exécution d'une opération neuronale. Avantageusement, l'exécution est effectuée au sein de chaque groupe par les unités de calcul des cœurs de calculs dédiés qui ont été préalablement assignés.

L'exécution d'une opération neuronale consiste d'une part à transmettre (508) vers les cœurs de calcul dédiés, depuis une mémoire externe à la plateforme de calcul multi-cœurs, des opérandes complémentaires aux opérandes préchargées en mémoires de groupe locales, et d'autre part à effectuer (510) l'opération neuronale sur les unités de calcul dédiées avec l'ensemble des opérandes préchargées et complémentaires.

Avantageusement, les étapes 508 et 510 peuvent être effectuées en parallèle de manière à d'une part traiter en 510 des données pour un pixel P(n-1), i.e. dont les données ont été transmises à un cycle précédent, et d'autre part en parallèle transmettre des données pour un pixel courant Pn qui sera traité au cycle suivant.

Dans un autre mode de réalisation, les étapes 508 et 510 sont effectuées séquentiellement pour traiter un même pixel.

Dans un mode de réalisation, le procédé peut comprendre pendant l'étape 506 d'exécution d'une opération neuronale, des étapes de traitement de données opérées sur des unités de calcul de cœurs de calculs voisins directs d'un cœur de calcul dédié.

Selon des modes de réalisation, l'étape de transmission d'opérandes complémentaires peut consister à transmettre des données de type pixels ou des valeurs de « feature-map » selon l'anglicisme consacré.

L'étape de transmission d'opérandes complémentaires peut consister à transmettre des données depuis une mémoire externe à la plateforme de calcul multi-cœurs aux groupes de cœurs via le réseau de bus de communication.

Dans un mode de réalisation, l'étape 510 d'exécution d'une opération neuronale consiste à effectuer dans un groupe de cœurs de calcul, des opérations de multiplication-accumulation, en utilisant, via les liens de voisinage entre cœurs voisins immédiats, des opérandes préchargées dans les différentes mémoires locales des différents cœurs voisins immédiats.

Quand l'opération d'exécution neuronale est terminée, le procédé itère (reboucle vers l'étape 502) pour passer à une opération suivante.

Le procédé poursuit par une étape 512 consistant à transmettre le résultat de l'exécution 510 d'une l'opération neuronale vers une mémoire extérieure à la plateforme de calcul multi-cœurs.

Dans un mode de réalisation, l'étape 512 de transmission de résultat, est effectuée pendant l'exécution d'une opération neuronale afin de transmettre le résultat d'une opération neuronale effectuée à un cycle précédent.

Il a ainsi été décrit une solution pour l'inférence de réseaux de neurones convolutifs, qui permet de n'utiliser qu'une partie seulement des cœurs de calcul d'un système multi-cœurs pour effectuer les calculs neuronaux, et qui permet d'étendre la capacité de la mémoire locale de chaque cœur de calcul dédié aux calculs comme la somme des capacités des mémoires locales de cœurs de calcul voisins directs.

L'invention a été décrite pour une architecture de plateforme multi-cœurs sans composant reconfigurable de type FPGA. D'autres architectures avec logique de programmation (PL) peuvent néanmoins être utilisées. La préparation d'un composant pour l'inférence de CNN consisterait à définir une architecture logique dans la partie PL de la plateforme et à programmer les groupes de cœurs chargés de la partie dominante du traitement neuronal, en adaptant les principes décrits.

## Revendications

1. Procédé de calcul pour l'inférence de réseaux de neurones convolutifs, le réseau de neurones convolutifs étant implémenté sur une plateforme de calcul multi-coeurs comprenant une pluralité de coeurs de calcul, chaque cœur comprenant une mémoire de cœur locale de capacité 'Cₘ' et une unité de calcul, les cœurs de calcul étant regroupés en groupes de cœurs de calcul, tel que dans un groupe, un cœur est assigné aux calculs des opérations neuronales et est connecté via des liens de voisinage à au moins un cœur de calcul voisin immédiat, le procédé comprenant lors d'une inférence (502), des étapes consistant à :
- précharger (504) un sous-ensemble d'opérandes requises pour effectuer une opération neuronale, dans les mémoires de cœurs locales des groupes de cœurs, les mémoires de cœurs locales d'un groupe de cœurs définissant une mémoire de groupe locale avec une capacité 'C_{M}' égale à la somme des capacités 'Cₘ' des mémoires de cœur locales des cœurs appartenant à un même groupe ;
- exécuter (506) l'opération neuronale, ladite exécution comprenant des étapes consistant à transmettre (508) vers les groupes de cœurs, des opérandes complémentaires aux opérandes préchargées en mémoire de groupe locale ; et à effectuer (510), par l'unité de calcul desdits cœurs de calcul assignés, l'opération neuronale avec l'ensemble des opérandes préchargées et complémentaires.

2. Procédé de calcul selon la revendication 1 dans lequel l'étape de préchargement dans chaque mémoire de groupe locale consiste à stocker les opérandes dudit sous-ensemble d'opérandes dans tout ou partie des mémoires de cœur locales dudit groupe.

3. Procédé de calcul selon l'une des revendications 1 ou 2 dans lequel l'étape de préchargement dans chaque mémoire de groupe locale consiste à précharger un sous-ensemble de coefficients de couches neuronales obtenus lors d'une phase d'apprentissage du réseau de neurones.

4. Procédé de calcul selon l'une quelconque des revendications précédentes dans lequel l'étape de transmission d'opérandes complémentaires consiste à transmettre des données de type pixels ou à transmettre des valeurs de « feature-map ».

5. Procédé de calcul selon l'une quelconque des revendications précédentes dans lequel l'étape de transmission consiste à transmettre des données depuis une mémoire externe à la plateforme de calcul multi-cœurs via un réseau de bus de communication, ledit réseau de bus étant agencé sur la plateforme multi-cœurs pour acheminer des données sur tous les cœurs de calcul et entre les cœurs de calcul.

6. Procédé de calcul selon l'une quelconque des revendications précédentes dans lequel l'étape d'effectuer l'opération neuronale comprend une étape de transfert de données stockées dans les mémoires locales des groupes, via les liens de voisinage entre cœurs voisins immédiats.

7. Procédé de calcul selon l'une quelconque des revendications précédentes dans lequel l'étape d'exécution d'une opération neuronale consiste à effectuer des opérations de multiplication-accumulation par les unités de calcul desdits cœurs dédiés.

8. Procédé de calcul selon l'une quelconque des revendications précédentes comprenant une étape (512) consistant à transmettre un résultat d'une opération neuronale vers une mémoire extérieure à la plateforme de calcul multi-cœurs, ladite étape étant effectuée après l'exécution d'une opération neuronale courante pour transmettre un résultat courant ou effectuée pendant l'exécution d'une opération neuronale pour transmettre un résultat d'une opération neuronale précédente.

9. Procédé de calcul selon l'une quelconque des revendications précédentes dans lequel les opérations de l'exécution d'une opération neuronale, sont réalisées en parallèle ou en séquentiel.

10. Procédé de calcul selon l'une quelconque des revendications précédentes comprenant de plus pendant l'étape d'exécution neuronale, des étapes de traitement de données opérées sur des unités de calcul de cœurs de calculs voisins directs d'un cœur de calcul dédié.

11. Procédé de calcul selon l'une quelconque des revendications précédentes comprenant de plus une étape consistant à mettre en veille les unités de calcul non actives des cœurs de calcul dédiés au stockage ou à les mettre en « power gating ».

12. Procédé de calcul selon l'une quelconque des revendications précédentes comprenant une étape initiale (400) consistant à créer des groupes de cœurs selon un motif prédéfini, le regroupement définissant pour chaque groupe, un cœur de calcul dédié aux calculs tel que seules les unités de calcul dudit cœur sont actives pour faire des calculs, et tel que la mémoire de groupe locale d'un groupe de cœurs est définie par une capacité 'C_{M}' égale à la somme des capacités 'Cₘ' des mémoires de cœur locales des cœurs dudit groupe.

13. Dispositif de calcul pour l'inférence de réseaux de neurones convolutifs, le réseau de neurones convolutifs étant implémenté sur une plateforme de calcul multi-coeurs comprenant une pluralité de coeurs de calcul, chaque cœur comprenant une mémoire de cœur locale de capacité 'Cₘ' et une unité de calcul, les cœurs de calcul étant regroupés en groupes de cœurs de calcul, tel que dans un groupe, un cœur est assigné aux calculs des opérations neuronales et est connecté via des liens de voisinage à au moins un cœur de calcul voisin immédiat, le dispositif comprenant des moyens pour mettre en œuvre les étapes du procédé selon l'une quelconque des revendications 1 à 12.
